(19) Europäisches Patentamt

European Patent Office

Office européen des brevets

(11) **EP 1 539 854 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(21) Anmeldenummer: **03798891.2**

(22) Anmeldetag: **04.09.2003**

(51) Int Cl.:
***C08G 65/20*** (2006.01)

(86) Internationale Anmeldenummer:
**PCT/EP2003/009807**

(87) Internationale Veröffentlichungsnummer:
**WO 2004/031260 (15.04.2004 Gazette 2004/16)**

(54) **VERFAHREN ZUR HERSTELLUNG VON MONO- UND DIESTERN DES POLYTETRAHYDROFURANS UND DER TETRAHYDROFURAN-COPOLYMERE**

METHOD FOR PRODUCING MONOESTERS AND DIESTERS OF POLYTETRAHYDROFURAN AND OF TETRAHYDROFURAN COPOLYMERS

PROCEDE DE PRODUCTION DE MONO- ET DE DIESTERS DE POLYTETRAHYDROFURANE ET DE COPOLYMERES DE TETRAHYDROFURANE

(84) Benannte Vertragsstaaten:
**AT BE BG CH CY CZ DE DK EE ES FI FR GB GR HU IE IT LI LU MC NL PT RO SE SI SK TR**

(30) Priorität: **12.09.2002 DE 10242286**

(43) Veröffentlichungstag der Anmeldung:
**15.06.2005 Patentblatt 2005/24**

(73) Patentinhaber: **BASF Aktiengesellschaft
67056 Ludwigshafen (DE)**

(72) Erfinder:
 • **PINKOS, Rolf
  67098 Bad Dürkheim (DE)**
 • **GERSTLAUER, Achim
  67065 Ludwigshafen (DE)**
 • **HAUBNER, Martin
  69124 Eppelheim (DE)**
 • **SCHLITTER, Stephan
  67117 Limburgerhof (DE)**
 • **KÄSHAMMER, Stefan
  67105 Schifferstadt (DE)**
 • **PFAFF, Klaus-Peter
  67159 Friedelsheim (DE)**

(56) Entgegenhaltungen:
 **EP-A- 0 503 394         WO-A-90/14327
 US-A- 4 568 775**

**Beschreibung**

Die vorliegende Erfindung betrifft ein Verfahren zur Herstellung von Mono- und Diestern des Polytetrahydrofurans oder der Tetrahydrofuran-Copolymere, das sich durch die.Verwendung eines Gemischs aus Polymer, Tetrahydrofuran, Comonomer und Carbonsäure und/oder Carbonsäureanhydrid zum Anfahren des Polymerisationsreaktors auszeichnet.

Polytetrahydrofuran (im folgenden "PTHF"), auch Polyoxybutylenglykol genannt, ist in der Kunststoff- und Kunstfaserindustrie ein vielseitiges Zwischenprodukt und wird unter anderem als Diolkomponente zur Herstellung von Polyurethan-, Polyester- und Polyamid-Elastomeren verwendet. Daneben ist es -wie auch manche seiner Derivate- in vielen Anwendungsfällen ein wertvoller Hilfsstoff, z.B. als Dispergiermittel oder beim Entfärben ("Deinken") von Altpapier.

PTHF wird technisch üblicherweise durch Polymerisation von Tetrahydrofuran (im folgenden "THF") an geeigneten Katalysatoren in Gegenwart von Reagenzien hergestellt, deren Zugabe die Steuerung der Kettenlänge der Polymerketten und so die Einstellung des mittleren Molekulargewichts ermöglicht (Kettenabbruchreagenzien oder "Telogene"). Die Steuerung erfolgt dabei durch Wahl von Art und Menge des Telogens. Durch Wahl geeigneter Telogene können zusätzlich funktionelle Gruppen an einem Ende oder beiden Enden der Polymerkette eingeführt werden.

So können z.B. durch Verwendung von Carbonsäuren oder Carbonsäureanhydriden als Telogene die Mono- oder Diester von PTHF hergestellt werden. Erst durch anschließende Verseifung oder Umesterung entsteht PTHF selbst. Daher wird diese Herstellung als zweistufiges PTHF-Verfahren bezeichnet.

Andere Telogene wirken nicht nur als Kettenabbruchreagenzien, sondern werden auch in die wachsende Polymerisatkette von PTHF eingebaut. Sie haben nicht nur die Funktion eines Telogens, sondern sind gleichzeitig ein Comonomer und können daher mit gleicher Berechtigung sowohl als Telogene wie auch als Comonomere bezeichnet werden. Beispiele für solche Comonomere sind Telogene mit zwei Hydroxygruppen, wie die Diole (Dialkohole). Dies können beispielsweise Ethylenglykol, Propylenglykol, Butylenglykol, 1,3-Propandiol, 1,4-Butandiol, 2-Butin- 1,4-diol, 1,6-Hexandiol oder niedermolekulares PTHF sein. Weiterhin sind als Comonomere cyclische Ether, wie 1,2-Alkylenoxide, z.B. Ethylenoxid oder Propylenoxid, 2-Methyltetrahydrofuran oder 3-Methyltetrahydrofuran geeignet. Die Verwendung solcher Comonomere führt mit Ausnahme von Wasser, 1,4-Butandiol und niedermolekularem PTHF zur Herstellung von Tetrahydrofuran-Copolymeren - im folgenden THF-Copolymere genannt- und ermöglicht es auf diese Weise, PTHF chemisch zu modifizieren.

Großtechnisch werden überwiegend die oben erwähnten zweistufigen Verfahren durchgeführt, bei denen THF z.B. in Gegenwart von Fluorsulfonsäure zunächst zu Polytetrahydrofuran-Estern polymerisiert und anschließend zu PTHF hydrolysiert wird. Üblicherweise werden bei dieser Form der THF-Polymerisation höhere THF-Umsätze als bei einstufigen Verfahren erzielt. Vorteilhaft ist vor allem die THF-Polymerisation in Gegenwart von Carbonsäureanhydriden oder Carbonsäureanhydrid/Carbonsäure-Gemischen, wie z.B. Acetanhydrid oder Acetanhydrid/Essigsäure-Gemische in Gegenwart saurer Katalysatoren zu PTHF-Acetaten und die anschließende Umesterung der PTHF-Acetate z.B. mit Methanol zu PTHF und Methylacetat.

Die in der Anmeldung bevorzugte Herstellung von PTHF-Estern durch THF-Polymerisation in Gegenwart von Carbonsäureanhydriden und/oder Carbonsäureanhydrid/Carbonsäure-Gemischen bzw. die Herstellung von THF-Copolymeren durch THF-Polymerisation in Gegenwart von Carbonsäureanhydriden und/oder Carbonsäureanhydrid/Carbonsäure-Gemischen und cyclischen Ethern als Comonomeren an festen sauren Katalysatoren ist an sich dementsprechend bekannt.

In der DE-A 44 33 606 wird unter anderem die Herstellung von PTHF und PTHF-Diestern durch Polymerisation von THF an einem heterogenen Katalysator in Gegenwart einer $C_1$- bis $C_{10}$-Monocarbonsäure oder eines Carbonsäureanhydrids aus $C_2$- bis $C_{20}$-Monocarbonsäure an einem wolfram- und molybdänhaltigen Trägerkatalysator beschrieben. Nach dem Befüllen des Polymerisationsreaktors mit Katalysator werden THF und das betreffende Telogen zugefügt und umgesetzt bis der gewünschte Umsatz des THF erreicht ist.

Die DE-A 12 26 560 beschreibt, dass zur Herstellung der PTHF-Diester THF, Essigsäureanhydrid und Montaiorillonit als Katalysator in einem Polymerisationskessel gemischt und sodann die Polymerisation angefahren wird.

Die genannten Verfahren zeigen, dass in der Regel die Polymerisationsreaktion mit einem Gemisch aus THF und Telogen angefahren werden. Unter Anfahren wird dabei in der vorliegenden Anmeldung die Inbetriebnahme des Polymerisationsreaktors und damit der Start der Polymerisation gemeint. Dabei kann es sich bei der Inbetriebnahme um die erstmalige eines Reaktors, aber auch um ein Wiederinbetriebnehmen beispielsweise nach einem Anlagenstillstand zum Zweck der Wartung handeln Bei einem kontinuierlich betriebenen Reaktor ist der Anfahrvorgang abgeschlossen, wenn der im Prozess übliche Flüssigkeitsfüllstand des Reaktors erreicht ist, und wenn sich ohne Zulauf von Ausgangsstoffen Temperatur, Druck und Zusammensetzung des Reaktorinhaltes nicht mehr nennenswert als Funktion der Zeit ändern.

Für grosstechnische Anlagen ist das Anfahren mit THF und Telogen ein hohes Sicherheitsrisiko. Die Reaktionsenthalpie pro Mol umgesetztes THF beträgt ca - 20kJ . Bei einem THF-Umsatz von 40 % ergibt sich eine adiabate Wärmetönung von etwa 60 K. Die freiwerdende Wärmeenergie kann nur mit hohem technischen Aufwand sicher abgeführt werden.

Der vorliegenden Erfindung lag daher die Aufgabe zugrunde, ein neues Verfahren zur Herstellung von Mono- oder Diestern des Polytetrahydrofurans oder der THF-Copolymere in Gegenwart saurer Katalysatoren zur Verfügung zu stellen, bei dem der Polymerisationsreaktor sicher angefahren werden kann..

Diese Aufgabe wird erfindungsgemäß durch ein Verfahren zur Herstellung von Mono- oder Diestern des Polytetrahydrofurans oder der Tetrahydrofuran-Copolymere durch Polymerisation von Tetrahydrofuran in Gegenwart mindestens eines Telogens und/oder Comonomers an einem sauren Katalysator gelöst, bei dem das Anfahren des Polymerisationsreaktors mit einem Gemisch aus Polytetrahydrofuran, den Mono- oder Diestern des Polytetrahydrofurans und/oder den Tetrahydrofuran-Copolymeren, Tetrahydrofuran, gegebenenfalls Comonomer und mindestens einer Carbonsäure und/oder eine Carbonsäureanhydrids erfolgt.

Überraschenderweise wurde nun gefunden, dass gegenüber der vorbeschriebenen Anfahrweise mit Tetrahydrofuran und Essigsäure und/oder Essigsäureanhydrid eine Steigerung des THF-Umsatzes von bis zu 5,5 % und eine Steigerung des Essigsäureanhydridumsatzes um bis zu 2,0 % durch das erfindungsgemäße Verfahren erreicht werden konnte.

Erfindungsgemäß wird zum Anfahren des Polymerisationsreaktors ein Gemisch verwendet, dass neben Tetrahydrofuran, Carbonsäure und/oder Carbonsäureanhydrid, bei Herstellung der Copolymere Comonomer, schon Polymer enthält. Dieses Polymer ist bevorzugt der mit dem erfindungsgemäßen Herstellungsverfahren herzustellende Mono- oder Diester des PTHF's oder des THF-Copolymers, also das als Produkt der Polymerisation gewünschte Polymer. Es ist jedoch auch möglich, Polytetrahydrofuran einzusetzen.

Die für das erfindungsgemäße Verfahren zum Anfahren des Reaktors eingesetzten Polymere PTHF oder die Mono- oder Diester des PTHF oder des THF-Cöpolymers sollten ein mittleres Molekulargewicht $M_n$ von 650 bis 4000 aufweisen.

Unter der Bezeichnung "mittleres Molekulargewicht" oder "mittlere Molmasse" wird in dieser Anmeldung das Zahlenmittel $M_n$ des Molekulargewichts der Polymere verstanden, dessen Bestimmung durch nasschemische OH-Zahlbestimmung erfolgt.

Unter der Hydroxylzahl wird diejenige Menge an Kaliumhydroxid in mg verstanden, die der bei der Acetylierung von 1 g Substanz gebundenen Menge Essigsäure äquivalent ist. Die Hydroxylzahl wird bestimmt durch die Veresterung der vorhandenen Hydroxylgruppen mit einem Überschuß an Essigsäureanhydrid. Nach der Umsetzung wird das überschüssige Essigsäureanhydrid mit Wasser hydrolysiert und als Essigsäure mit Natronlauge zurücktitriert.

Die Konzentration des zum Anfahren verwendeten Polymers (PTHF, Mono- oder Diester des PTHF's oder des THF-Copolymers) im zum Anfahren verwendeten Gemisch beträgt 20 bis 80 Gew.-%, bezogen auf die Gesamtmenge des Gemischs aus zum Anfahren verwendeten Polymer, Telogen und/oder Comonomer und THF, bevorzugt 30 bis 65 Gew.-%.

Das zum Anfahren des Polymerisationsreaktors verwendete Gemisch weist einen Gehalt von 7 bis 80 Gew.-% Tetrahydrofuran oder bei Herstellung der THF-Copolymere 7 bis 80 Gew.-% der Gesamtmenge aus Tetrahydrofuran und Comonomer, bezogen auf die Gesamtmenge des zum Anfahren verwendeten Gemischs aus Polymer, Telogen, THF und Comonomer, bevorzugt 29 bis 69 Gew.-%, bezogen auf die Gesamtmenge aus dem zum Anfahren verwendeten Gemischs, auf.

Da das Telogen zum Kettenabbruch führt, lässt sich über die eingesetzte Telogenmenge das Molekulargewicht des herzustellenden Polymers steuern.

Als Telogene eignen sich bei der Herstellung von Mono- und Diestern des PTHF's oder der THF-Copolymere Carbonsäureanhydride und/oder Carbonsäuren.

Vorzugsweise werden organische Carbonsäuren oder deren Anhydride verwendet. Unter diesen sind aliphatische und aromatische Poly- und/oder Monocarbonsäuren, die 2 bis 12, bevorzugt 2 bis 8 Kohlenstoffatome enthalten, bevorzugte Beispiele für aliphatische Carbonsäuren sind Essigsäure, Acrylsäure, Milchsäure, Propionsäure, Valeriansäure, Capronsäure, Caprylsäure und Pelargonsäure, von denen Essigsäure bevorzugt ist. Beispiele für aromatische Carbonsäuren sind Phthalsäure- und Naphthalincarbonsäure. Beispiele für Anhydride von aliphatischen Polycarbonsäuren sind Acrylsäure- ,Bernsteinsäure- und Maleinsäureanhydrid. Insbesondere ist Essigsäureanhydrid bevorzugt.

Für das erfindungsgemäße Verfahren wird das als Telogen eingesetzte Carbonsäureanhydrid bezogen auf die Gesamtmenge aus dem zum Anfahren verwendete Gemisch aus Polymer, THF und gegebenenfalls Comonomer und Telogen in einer Menge von 0,5 bis 10 Gew.-%, bevorzugt von 0,5 bis 5 Gew.-% eingesetzt. Dabei wird das Telogen gegebenenfalls zusammen mit dem Comonomer zweckmäßig in THF gelöst der Polymerisation zugeführt.

Wird zusätzlich zum Carbonsäureanhydrid eine Carbonsäure als Telogen eingesetzt, so beträgt deren Konzentration bezogen auf die Gesamtmenge aus dem zum Anfahren verwendeten Polymers, THF, Comonomer und Telogen bis zu 3 Gew.-%, bevorzugt 0,1 bis 1 Gew.-%.

Je nach Telogengehalt der Polymerisationsmischung lassen sich mit dem erfindungsgemäßen Verfahren Mono- und Diester des PTHF und der THF-Copolymere mit mittleren Molekulargewichten von 250 bis 10000 Dalton gezielt herstellen, vorzugsweise werden mit dem erfindungsgemäßen Verfahren die betreffenden PTHF-Ester bzw. Ester der THF-Copolymere mit mittleren Molekulargewichten von 500 bis 5000 Dalton, besonders bevorzugt 650 bis 4000 Dalton hergestellt.

Die Mono- und Diester der THF-Copolymere lassen sich herstellen durch die zusätzliche Verwendung von cyclischen Ethern als Comonomere, die sich ringöffnend polymerisieren lassen, bevorzugt drei-, vier- und fünfgliedrige Ringe,'wie 1,2-Alkylenoxide, z.B. Ethylenoxid oder Propylenoxid, Oxetan, substituierte Oxetane, wie 3,3-Dimethyloxetan, die THF-Derivate 2-Methyltetrahydrofuran oder 3-Methyltetrahydrofuran, wobei 2-Methyltetrahydrofuran oder 3-Methyltetrahydrofuran besonders bevorzugt sind.

Gemäß dem erfindungsgemäßen Verfahren kann das Anfahren des Polymerisationsreaktors mit einem lösungsmittelhaltigen oder lösungsmittelfreien Gemisch aus PTHF, Mono- oder Diester des PTHF's oder das THF-Copolymere, THF, Comonomer sowie Carbonsäure und/oder Carbonsäureanhydrid erfolgen. Das Lösungsmittel muß unter den Reaktionsbedingungen inert sein. Derartige Lösungsmittel können beispielsweise sein: lineare oder verzweigte $C_5$- bis $C_{12}$-Alkane wie zum Beispiel n-Hexan, n-Heptan, n-Octan, Cyclohexan, halogenierte Kohlenwasserstoffe wie zum Beispiel Dichlormethan oder aromatische Kohlenwasserstoffe wie Toluol, Xylol, Ethylbenzol.

Bevorzugt wird das erfindungsgemäße Verfahren lösungsmittelfrei durchgeführt.

Die Auswahl des für die Polymerisation verwendeten sauren Katalysators ist an sich nicht kritisch für das erfindungsgemäße Verfahren. Das erfindungsgemäße Verfahren kann mit allen zur Polymerisation von THF geeigneten sauren, bevorzugt heterogenen Katalysatoren betrieben werden. Darunter seien beispielsweise genannt Katalysatoren auf Basis von Bleicherden wie sie beispielsweise in DE-A 1 226 560 beschrieben sind, genannt. Bleicherden, insbesondere auch aktivierte Montmorillonit, können als Formkörper im Festbett oder in Suspension verwendet werden.

Weiterhin sind Katalysatoren auf Basis gemischter Metalloxide für die Polymerisation von THF bekannt. So beschreibt die JP-A 04-306 228 die Polymerisation von THF in Gegenwart eines Carbonsäureanhydrids an einem gemischten Metalloxid bestehend aus Metalloxiden der Formel $M_xO_y$ mit ganzzahligen x und y im Bereich 1-3. Genannt werden als Beispiele $Al_2O_3$-$SiO_2$, $SiO_2$-$TiO_2$, $SiO_2$-$ZrO_2$ und $TiO_2$-$ZRO_2$.

Die US 5,208,385 offenbart Katalysatoren auf Basis amorpher Silicium/Aluminium-Mischoxide. Auch Mischoxide auf Basis $SnO_2/SiO_2$, $Ga_2O_3/SiO_2$, $Fe_2O_3/SiO_2$, $In_2O_3/SiO_2$, $Ta_2O_5/SiO_2$ und $HfO_2/SiO_2$ sind bekannt. Die vorgenannten Katalysatoren werden bevorzugt durch Copräzipitation/Sol-Gel-Methoden hergestellt. Trägerkatalysatoren sind in der DE-A 44 33 606 offenbart, wobei Wolfram- oder Molybdänoxide auf z.B. $ZrO_2$, $TiO_2$, $HfO_2$, $Y_2O_3$, $Fe_2O_3$, $Al_2O_3$, $SnO_2$, $SiO_2$ oder ZnO aufgebracht werden. Weiterhin werden $ZrO_2/SiO_2$-Katalysatoren empfohlen, bei denen der Träger eine Alkalimetall-Konzentration < 5000 ppm aufweist.

Katalysatoren auf Basis saurer Ionentauscher sind in US 4,120,903 für Polymerisation von THF, insbesondere alpha-Fluorsulfonsäure enthaltende Polymere (beispielsweise Nafion®), in Gegenwart von Essigsäureanhydrid beschrieben. Weiterhin sind Katalysatoren, die ein Metall und Perfluoralkylsulfonsäure-Anionen enthalten für die THF-Polymerisation geeignet.

Daneben sind als Polymerisationskatalysatoren noch weitere gegebenenfalls aktivierte Tonmineralien bekannt, offenbart beispielsweise in der WO 94/05719, WO 96/23833, WO 98/51729, WO 99/12992 und DE-A 195 134 93. Auch Zeolithe sind als Katalysatoren geeignet und werden beispielsweise in DE-A 43 16 138 beschrieben.

Schließlich sind noch sulfatisierte Zirkonoxide, sulfatisierte Aluminiumoxide, geträgerte Heteropolysäuren und geträgertes Ammoniumbifluorid ($NH_4F^*HF$ oder Antimonpentafluorid) als geeignete Polymerisationskatalysatoren bekannt. Bevorzugt wird das erfindungsgemäße Verfahren mit aktivierten Bleicherden durchgeführt.

Als Vorbehandlung des Katalysators kommt beispielsweise das Trocknen mit auf 80 bis 200°C, bevorzugt auf 100 bis 150°C erwärmten Gasen, wie z.B. Luft oder Stickstoff, in Frage.

Erfindungsgemäß wurde erkannt, dass auf das Vorbehandeln der Katalysatoren jedoch verzichtet werden kann, wenn der Anteil von Essigsäureanhydrid im Gemisch das zum Anfahren verwendet wird, vergrößert wird. Als Anhaltspunkt kann der Wassergehalt des Katalysators herangezogen werden. Bei der Abschätzung sollte davon ausgegangen werden, dass ein mol physikalisch gebundenes Wasser auf dem Katalysator (Trocknungsverlust bei 150°C) einen Mehrbedarf von 1 bis 1,5 mol Essigsäureanhydrid bedeutet.

Für grosstechnisch Festbettreaktoren mit ihrem großen hold-up an Katalysator bedeutet der Verzicht auf die Trocknung des Katalysators einen enormen Zeitvorteil falls ein Katalysatorwechsel durchgeführt wird. Dadurch wird die Verfügbarkeit der Anlagen vergrößert und damit die Produktionskosten gesenkt. Bei Prozessen bei denen mit suspendierten Katalysatoren gearbeitet wird, wie z.B. bei Rühr- oder Fließbettreaktoren, entfällt die aufwendige Vorbehandlung des Katalysators in einer separaten Anlage sowie die Lagerung unter trokkenen Inertgasen.

Die Polymerisation wird im allgemeinen bei Temperaturen von 0 bis 80°C, vorzugsweise von 25°C bis zur Siedetemperatur des THF, durchgeführt. Der angewandte Druck ist in der Regel für das Ergebnis der Polymerisation nicht kritisch, weshalb im allgemeinen bei Atmosphärendruck oder unter dem Eigendruck des Polymerisationssystems gearbeitet wird. Ausnahmen hiervon bilden Copolymerisationen von THF mit den leichtflüchtigen 1,2-Alkylenoxiden, die vorteilhafterweise unter Druck ausgeführt werden. Üblicherweise beträgt der Druck 0,1 bis 20 bar, bevorzugt 0,5 bis 2 bar.

Zur Vermeidung der Bildung von Etherperoxiden wird die Polymerisation vorteilhaft unter einer Inertgasatmosphäre vollzogen. Als Inertgase können z. B. Stickstoff, Kohlendioxid oder die Edelgase dienen, bevorzugt wird Stickstoff verwendet.

Bei der kontinuierlichen Betriebsweise kann die Umsetzung in herkömmlichen, für kontinuierliche Verfahren geeigneten Reaktoren oder Reaktoranordnungen in Suspensions- oder Festbettfahrweise ausgeführt werden, bei Suspensionsfahrweise beispielsweise in Schlaufenreaktoren, Rührreaktoren oder Fließbettreaktoren und bei Festbettfahrweise in Rohrreaktoren mit oder ohne Produktrückführung, wobei die Festbettfahrweise bevorzugt ist.

Bei Festbettfahrweise wird der erfindungsgemäß verwendete Katalysator vor dem Befüllen des Reaktors mit dem zum Anfahren verwendeten Gemisch in den Reaktor verbracht. Es ist jedoch auch möglich zunächst das zum Anfahren verwendete Gemisch oder ein Lösungsmittel vorzulegen und den Katalysator in fester oder suspendierter Form zuzugeben.

In der bevorzugten Festbettfahrweise kann der Polymerisationsreaktor in Sumpffahrweise, d.h. das Reaktionsgemisch wird von unten nach oben geführt, oder in Rieselfahrweise, d.h. das Reaktionsgemisch wird von oben nach unten durch den Reaktor geführt, betrieben werden. Das Eduktgemisch (Feed) aus THF und Telogen und/oder Comonomer wird dem Polymerisationsreaktor kontinuierlich zugeführt, wobei die Katalysatorbelastung 0,01 bis 2,0 kg THF/(1 Katalysator*h), bevorzugt 0,02 bis 1,0 kg THF/(1 Katalysator*h) und besonders bevorzugt 0,04 bis 0,5 kg THF/(1 Katalysator*h)beträgt.

Weiterhin kann der Polymerisationsreaktor im geraden Durchgang, d.h. ohne Produktrückführung, oder im Umlauf, d.h. ein Teil des den Reaktor verlassenden Polymerisationsgemischs wird im Kreislauf geführt, betrieben werden. Bei der Umlauffahrweise beträgt das Verhältnis von Umlauf zu Zulauf kleiner oder gleich 100 : 1, bevorzugt kleiner 80 : 1 und besonders bevorzugt kleiner 60 : 1.

Nach Abschluss des Anfahrvorganges, d.h. wenn. Temperatur, Druck und Zusammensetzung des Reaktorinhaltes sich nicht mehr nennenswert als Funktion der Zeit ändern, liegt die Konzentration des als Telogen eingesetzten Carbonsäureanhydrids in dem dem Polymerisationsreaktor zugeführten Eduktgemisch (Feed) zwischen 0,03 bis 30 mol-%, bevorzugt bei 0,05 bis 20 mol-%, besonders bevorzugt bei 0,1 bis 10 mol-%, bezogen auf das eingesetzte THF.

Wird zusätzlich eine Carbonsäure verwendet, so beträgt das Molverhältnis im Feed der laufenden Polymerisation üblicherweise 1 : 20 bis 1 : 20000, bezogen auf eingesetztes Carbonsäureanhydrid.

Werden zusätzlich Comonomere verwendet, so beträgt das Molverhältnis im Feed der laufenden Polymerisation üblicherweise 0,1 bis 50, bevorzugt 0,5 bis 40, besonders bevorzugt 1 bis 30 mol-%, bezogen auf eingesetztes THF.

Wurde die Polymerisation in Suspensionsfahrweise durchgeführt, ist es zur Aufarbeitung des Polymerisationsaustrags erforderlich, den überwiegenden Teil des Polymerisationskatalysators beispielsweise durch Filtration, Dekantieren oder Zentrifugieren vom Polymerisationsgemisch abzutrennen und den erhaltenen Polymerisationsaustrag der weiteren Aufarbeitung zuzuführen. In der bevorzugten Festbettfahrweise wird der Polymerisationsaustrag direkt weiter aufgearbeitet.

Die Aufarbeitung der besonders bevorzugten PTHF-Acetate bzw. THF-Copolymer-Acetate kann nach an sich bekannten Methoden erfolgen. Beispielsweise wird nach destillativer Abtrennung von nicht umgesetztem THF und gegebenenfalls Essigsäureanhydrid, Essigsäure und Comonomer das erhaltene PTHF-Acetat bzw. THF-Copolymer-Acetat basenkatalysiert mit Methanol zu PTHF bzw. THF-Copolymer und Methylacetat umgeestert.

Gewünschtenfalls kann anschließend niedermolekulares PTHF und/oder Tetrahydrofurancopolymer eines mittleren Molekulargewichts von 200 bis 700 Dalton destillativ abgetrennt werden. Als Destillationsrückstand verbleibt PTHF bzw. THF-Copolymer mit mittleren Molekulargewichten von 650 bis 10.000 Dalton.

Die Katalysatoren können nach Einsatz in einem diskontinuierlich oder kontinuierlich betriebenen PTHF-Verfahren regeneriert werden, beispielsweise durch Temperaturbehandlung, wie in der EP-A-0 535 515 beschrieben, und/oder durch Waschen des Katalysators mit wässrigen und/oder organischen Lösungsmitteln.

Die erhaltenen Mono- und Diacetate des PTHF's und der THF-Copolymere lassen sich nach an sich bekannten, beispielsweise in US 4,460,796 beschriebenen Verfahren in Polytetrahydrofuran überführen.

Beispiele

Im folgenden wird die Erfindung anhand von Beispielen näher erläutert.

Katalysator A

350 g eines säureaktivierten Bentoniten (Bleicherde K10, Fa. Südchemie) wurde in einem Laborkneter mit 260 ml Wasser für 26 min intensiv verknetet, anschließend zu Strängen mit einem Durchmesser von 2,5 mm und einer mittleren Länge von 10 mm extrudiert, getrocknet und bei 350°C kalciniert. Die Porenradienverteilung (Hg-Porosimetrie) dieses Katalysators ist bimodal mit Maxima im Bereich von 60 Å und 1000 Å Porenradius, die Porosität im Bereich der Porenradien von 200A - 3000A liegt bei 0,15 cm$^3$/g.

Molekulargewichtsbestimmung

Das mittlere Molekulargewicht ($M_n$) des erhaltenen PolyTHF oder der PolyTHF-Copolymere wurde durch Gelpermeationschromatographie (GPC) ermittelt und ist definiert durch die Gleichung

$$M_n = \Sigma c_i / \Sigma (c_i / M_i),$$

in der $c_i$ für die Konzentration der einzelnen Polymerspezies i im erhaltenen Polymergemisch steht und in der $M_i$ das Molekulargewicht der einzelnen Polymerspezies i bedeutet.

Die Polydispersität D als Maß für die Molekulargewichtsverteilung der gemäß den Beispielen hergestellten Polymeren wurde aus dem Verhältnis von Gewichtsmittel des Molekulargewichts ($M_w$) und Zahlenmittel des Molekulargewichts ($M_n$) nach der Gleichung

$$D = M_w / M_n$$

errechnet. Mw und Mn wurden mittels GPC bestimmt, wobei ein standardisiertes PolyTHF zur Eichung verwendet wurde. Aus den erhaltenen Chromatogrammen wurde das Zahlenmittel $M_n$ nach der Gleichung

$$M_n = \Sigma c_i / \Sigma (c_i / M_i)$$

und das Gewichtsmittel Mw nach der Gleichung

$$M_w = (\Sigma(c_i * M_i)) / \Sigma c_i$$

berechnet, in der $c_i$ für die Konzentration der einzelnen Polymerspecies i im erhaltenen Polymergemisch steht und in der Mi das Molekulargewicht der einzelnen Polymerspecies i bedeutet.

Beispiel 1

In einem Reaktor mit einem Volumen von 400 ml wurden 170 g des sauren Katalysators A (analog dem Katalysator 1 aus Beispiel B der DE 101 30 782) 24 h bei 150°C getrocknet. Nach dem Abkühlen auf 34°C wurde eine Mischung bestehend aus 60 Gew.-% Polytetrahydrofurandiacetat der mittleren Molmasse 1950 Dalton, 37 Gew.-% THF und 3 % Essigsäureanhydrid von unten in den Reaktor eingefüllt. Nach 5 Minuten was das Katalysatorbett vollständig benetzt; die Temperatur im Katalysatorbett stieg während des Befüllvorgangs von 34°C auf 42°C an. Mit einer Umlaufpumpe wurde ein Flüssigkeitsumlauf über das Katalysatorbett von 1 l/h eingestellt. Nach dem Stabilisieren der Reaktionstemperatur auf 40°C wurde ein Gemisch von 96,9 Gew.-% THF und 3,1 Gew.-% Essigsäureanhydrid mit einem Massenstrom von 11,5 g/h dem umgewälzten Flüssigkeitsstrom beigemischt. Die Analyse des Reaktoraustrags nach einem Betrieb von 13 Tagen ergab einen Polymeranteil von 57,7 % mit der mittleren Molmasse von 2002 Dalton und einer Polydispersität von 2,4. Der Umsatz von Essigsäureanhydrid betrug 95 %.

Beispiel 2

Das Anfahren des Polymerisationsreaktors wurde analog Beispiel 1, jedoch mit einer Mischung von 61,5 Gew.-% Polytetrahydrofurandiacetat der mittleren Molmasse 2022 Dalton, 37,5 Gew.-% Tetrahydrofuran und 1 Gew.-% Essigsäureanhydrid durchgeführt. Während des Befüllens stieg die Temperatur von 34°C auf 42°C an. Die Anordnung wurde dann wie in Beispiel 1 kontinuierlich betrieben. Nach 13 Tagen betrug der Polymeranteil im Reaktoraustrag 57,7 % (mittlere Molmasse 2025 Dalton) und der Umsatz an Essigsäureanhydrid 94,7 %.

Beispiel 3

In der in Beispiel 1 beschriebenen Apparatur wurde der Katalysator nach dem Einfüllen nicht getrocknet. In einem separaten Versuch wurde festgestellt, dass der eingesetzte Katalysator noch 1,5 % Wasser ermittelt als Trocknungsverlust bei 150°C enthielt. Das Katalysatorfestbett wurde mit einer Mischung von 59,5 Gew.-% Polytetrahydrofurandiacetat der mittleren Molmasse 1784 Dalton, 36,5 Gew.-% Tetrahydrofuran und 4 Gew.-% Essigsäureanhydrid angefahren. Während des Befüllens stieg die Temperatur von 35°C auf 40°C an. Die Anordnung wurde dann wie in Beispiel 1 kontinuierlich betrieben. Nach 15 Tagen betrug der Polymeranteil im Reaktoraustrag 56,7 % (mittlere Molmasse 2014 Dalton, Polydispersität 2.1) und der Umsatz von Essigsäureanhydrid 93.9 %).

Vergleichsbeispiel 1

Das Anfahren des Polymerisationsreaktors wurde analog Beispiel 1, jedoch mit einer nicht erfindungsgemäßen Mischung 96,9 Gew.-% Tetrahydrofuran und 3,1 Gew.-% Essigsäureanhydrid angefahren. Während des Befüllens stieg die Temperatur von 34°C auf 56°C an. Die Anordnung wurde dann wie in Beispiel 1 kontinuierlich betrieben. Nach 11 Tagen betrug der Polymeranteil im Reaktoraustrag 54,7 % (mittlere Molmasse 2025 Dalton, Polydispersität 2,2) und der Umsatz an Essigsäureanhydrid 93,2 %.

**Patentansprüche**

1. Verfahren zur Herstellung von Mono- oder Diestern des Polytetrahydrofurans oder der Tetrahydrofuran-Copolymere durch Polymerisation von Tetrahydrofuran in Gegenwart mindestens eines Telogens und/oder eines Comonomers an einem sauren Katalysator, wobei das Anfahren des Polymerisationsreaktors mit einem Gemisch aus Polytetrahydrofuran, den Mono- oder Diestern des Polytetrahydrofurans und/oder der Tetrahydrofuran-Copolymere, Tetrahydrofuran, gegebenenfalls Comonomer und mindestens einer Carbonsäure und/oder eines Carbonsäureanhydrids erfolgt.

2. Verfahren nach Anspruch 1, **dadurch gekennzeichnet, dass** die zum Anfahren verwendeten Mono- oder Diester des Polytetrahydrofurans oder der Tetrahydrofuran-Copolymere oder das Polytetrahydrofuran ein mittleres Molekulargewicht $M_n$ von 650 bis 4000 aufweisen.

3. Verfahren nach Anspruch 1 oder 2, **dadurch gekennzeichnet, dass** die Konzentration des zum Anfahren verwendeten Polymers 20 bis 80 Gew.-%, bezogen auf die Gesamtmenge des zum Anfahren verwendeten Gemischs beträgt.

4. Verfahren nach einem der Ansprüche 1 bis 3, **dadurch gekennzeichnet, dass** das zum Anfahren verwendete Gemisch 7 bis 80 Gew.-% Tetrahydrofuran oder der Gesamtmenge aus Tetrahydrofuran und Comonomer, bezogen auf die Gesamtmenge des zum Anfahren verwendeten Gemischs, enthält.

5. Verfahren nach einem der Ansprüche 1 bis 4, **dadurch gekennzeichnet, dass** 0,5 bis 10 Gew.-% Carbonsäureanhydrid bezogen auf die Gesamtmenge des zum Anfahren verwendeten Gemischs, zum Anfahren eingesetzt wird.

6. Verfahren nach einem der Ansprüche 1 bis 5, **dadurch gekennzeichnet** das Acetanhydrid verwendet wird.

7. Verfahren nach einem der Ansprüche 1 bis 6, **dadurch gekennzeichnet, dass** zusätzlich zum Carbonsäureanhydrid bis zu 3 Gew.-%, bezogen auf die Gesamtmenge des zum Anfahren verwendeten Gemischs, Carbonsäure verwendet wird.

8. Verfahren nach einem der Ansprüche 1 bis 7, **dadurch gekennzeichnet, dass** dem zum Anfahren des Polymerisationsreaktors verwendeten Gemisch ein inertes Lösungsmittel zugesetzt wird.

## Claims

1. A process for preparing mono- or diesters of polytetrahydrofuran or of tetrahydrofuran copolymers by polymerizing tetrahydrofuran in the presence of at least one telogen and/or of a comonomer over an acidic catalyst, wherein the polymerization reactor is started up using a mixture of polytetrahydrofuran, the mono- or diesters of polytetrahydrofuran and/or of the tetrahydrofuran copolymers, tetrahydrofuran, any comonomer and at least one carboxylic acid and/or one carboxylic anhydride.

2. The process according to claim 1, wherein the mono- or diesters of polytetrahydrofuran or of the tetrahydrofuran copolymers or the polytetrahydrofuran used for startup have an average molecular weight $M_n$ of from 650 to 4000.

3. The process according to claim 1 or 2, wherein the concentration of the polymer used for startup is from 20 to 80% by weight, based on the total amount of the mixture used for startup.

4. The process according to any of claims 1 to 3, wherein the mixture used for startup comprises from 7 to 80% by weight of tetrahydrofuran or the total amount of tetrahydrofuran and comonomer, based on the total amount of the mixture used for startup.

5. The process according to any of claims 1 to 4, wherein from 0.5 to 10% by weight of carboxylic anhydride are used for startup, based on the entire amount of the mixture used for startup.

6. The process according to any of claims 1 to 5, wherein acetic anhydride is used.

7. The process according to any of claims 1 to 6, wherein, in addition to the carboxylic anhydride, up to 3% by weight, based on the total amount of the mixture used for startup, of carboxylic acid are used.

8. The process according to any of claims 1 to 7, wherein an inert solvent is added to the mixture used for starting up the polymerization reactor.

## Revendications

1. Procédé de préparation de monoesters ou de diesters de polytétrahydrofurane ou de copolymères de tétrahydrofurane par polymérisation de tétrahydrofurane en présence d'au moins un agent télogène et/ou d'un comonomère sur un catalyseur acide, dans lequel on démarre le réacteur de polymérisation avec un mélange de polytétrahydrofurane, de monoesters ou de diesters de polytétrahydrofurane et/ou de copolymères de polytétrahydrofurane, de tétrahydrofurane, éventuellement d'un comonomère, et d'au moins un acide carboxylique et/ou d'un anhydride carboxylique.

2. Procédé selon la revendication 1, **caractérisé en ce que** les monoesters ou diesters de polytétrahydrofurane ou de copolymères de polytétrahydrofurane ou le polytétrahydrofurane utilisés pour le démarrage ont un poids moléculaire moyen $M_n$ compris entre 650 et 4 000.

3. Procédé selon les revendications 1 ou 2, **caractéri-**

**sé en ce que** la concentration du polymère utilisé pour le démarrage est comprise entre 20 et 80 % en poids du mélange total utilisé pour le démarrage.

4. Procédé selon l'une des revendications 1 à 3, **caractérisé en ce que** le mélange utilisé pour le démarrage contient de 7 à 80 % en poids de tétrahydrofurane ou de tétrahydrofurane et de comonomère par rapport à la quantité totale du mélange utilisé pour le démarrage.

5. Procédé selon l'une des revendications 1 à 4, **caractérisé en ce que**, pour le démarrage, on utilise de 0,5 à 10 % en poids d'anhydride carboxylique par rapport à la quantité totale du mélange utilisé pour le démarrage.

6. Procédé selon l'une des revendications 1 à 5, **caractérisé en ce qu'**on utilise de l'anhydride acétique.

7. Procédé selon l'une des revendications 1 à 6, **caractérisé en ce qu'**outre l'anhydride carboxylique, on utilise jusqu'à 3 % en poids d'acide carboxylique par rapport à la quantité totale du mélange utilisé pour le démarrage.

8. Procédé selon l'une des revendications 1 à 7, **caractérisé en ce qu'**on ajoute un solvant inerte au mélange utilisé pour le démarrage du réacteur de polymérisation.